# EUROPEAN PATENT SPECIFICATION

(11) **EP 3 950 842 B1**
(45) Date of publication and mention of the grant of the patent: **27.11.2024**
(21) Application number: 20805765.3
(22) Date of filing: 29.04.2020
(51) Int. Cl.: C08L 75/08, C08L 75/06, C08J 9/14, C08J 9/12, C08G 18/66, C08G 18/48, C08G 18/42, C08G 18/32, C08G 18/40, C08G 18/73, C08G 18/75, C08J 9/00, C08K 5/00, C08K 5/134, C08K 5/3435, C08K 5/3475

(54) **YELLOWING-RESISTANT THERMOPLASTIC POLYURETHANE FOAMING MATERIAL AND PREPARATION METHOD THEREFOR**
VERGILBUNGSBESTÄNDIGES THERMOPLASTISCHES POLYURETHANSCHAUMMATERIAL UND HERSTELLUNGSVERFAHREN DAFÜR
MATÉRIAU DE MOUSSAGE DE POLYURÉTHANE THERMOPLASTIQUE RÉSISTANT AU JAUNISSEMENT ET SON PROCÉDÉ DE PRÉPARATION

(30) Priority: 16.05.2019 CN 201910411191
(43) Date of publication of application: 09.02.2022
(73) Proprietor: Miracll Chemicals Co., Ltd., Yantai, Shandong 264006 (CN)
(72) Inventor: SONG, Hongwei, Yantai, Shandong 264006 (CN); WANG, Guangfu, Yantai, Shandong 264006 (CN); YANG, Chongchong, Yantai, Shandong 264006 (CN); ZHANG, Sheng, Yantai, Shandong 264006 (CN); WANG, Renhong, Yantai, Shandong 264006 (CN)
(74) Representative: karo IP
(86) International application number: PCT/CN2020/087850
(87) International publication number: WO 2020/228540

(56) References cited:
- CN-A- 101 402 719
- CN-A- 102 276 785
- CN-A- 103 408 922
- CN-A- 103 709 726
- CN-A- 109 438 661
- CN-A- 109 694 494
- CN-A- 110 183 843
- JP-A- 2017 179 254
- US-A1- 2002 192 452

## Description

### TECHNICAL FIELD

The present disclosure belongs to the field of polymer foam materials, and specifically relates to a yellowing-resistant thermoplastic polyurethane (TPU) foam material comprising a TPU prepared by subjecting an aliphatic diisocyanate, a chain extender, a polyol, an antioxidant, an ultraviolet (UV) absorber, and a UV light stabilizer to a reaction and a preparation method thereof, as set out in the appended set of claims.

### BACKGROUND

With a plastic as a matrix, a large number of bubbles are filled in the matrix by a physical or chemical method to obtain a polymer foam material. Due to a series of advantages such as low density, heat and sound insulation, high specific strength, and buffering, foam materials are widely used in fields of packaging, industry, agriculture, transportation, military, aerospace, commodities, and the like. Commonly used foam plastics include polyurethane (PU) flexible and rigid foam plastics, polystyrene (PS) foam plastics, polyethylene (PE) foam plastics, polypropylene (PP) foam plastics, etc. However, PU foam plastics are prone to having residual isocyanate during a foaming process, which is harmful to the human body and makes the foam materials unable to be recycled. PS foam plastic products are difficult to degrade and easily cause white pollution. The United Nations Environment Programme (UNEP) has decided to stop the use of PS foam plastic products. PE foam plastics have poor high-temperature resistance and are not suitable for applications in high temperature fields.

TPU has the merits of having wide hardness range, excellent wear resistance, mechanical strength, water resistance, oil resistance, chemical resistance, and mold resistance, and being environmentally friendly and recyclable. Foaming TPU particles are filled into a mold, and then subjected to hot forming with water vapor to obtain a molded foam product. Such a product not only retains the excellent performance of the original matrix, but also has excellent resilience, shape diversity, low density, which can be used in a wide temperature range. Based on the above advantages, TPU foam materials show very promising application prospects in many industrial fields (automobiles and packaging materials) and daily life fields (shoe materials, pillows, and mattresses).

Expanded thermoplastic polyurethane (E-TPU) foam material has been disclosed in patent documents WO2007/082838A, WO2010/136398A, CN102229709A, CN102276785A, and CN103183805A, and a TPU resin raw material used is generally synthesized from an aromatic isocyanate such as methylene diphenyl diisocyanate (MDI). TPU foam material products will undergo long-term sunlight exposure when used outdoors. When a TPU resin foam material synthesized from an aromatic isocyanate such as MDI is under the action of ultraviolet (UV) rays, a dicarbamate bridge structure of an aromatic ring will be automatically oxidized into a quinone-imine bond or an azo compound, which is accompanied by the yellowing of a product and the decrease of mechanical properties. In patented technologies currently disclosed, a large amount of a UV-resistant additive is added to a TPU resin raw material to improve the yellowing resistance of a material, but these technologies still have the following defects: (1) The addition of the anti-UV additive cannot essentially change the yellowing nature of TPU, and with the extension of a service time of a product, the effect of the anti-UV additive will gradually decrease, which ultimately leads to greatly reduced product performance and shortened service life. (2) The anti-UV additive is usually added in a process of preparing a TPU material or subsequently modifying the TPU material. In particular, for fields that require high yellowing resistance, such as the field of shoe materials, a large amount of the anti-UV additive needs to be added to extend a service life of a product. However, the addition of a large amount of the anti-UV additive will greatly affect the stability of a TPU synthesis process and the final performance of subsequent TPU foam particles. Therefore, the development of a TPU foam material with excellent yellowing resistance is an urgent problem to be solved at present.

JP 2017 179254 provides thermoplastic polyurethane foaming particles containing thermoplastic polyurethane as a substrate resin and a pigment, and a hindered phenol compound, a benzotriazole compound and a hindered amine compound which are blended in the substrate resin, and a thermoplastic polyurethane foaming particle molded body obtained by molding the thermoplastic polyurethane foaming particles.

### SUMMARY

In order to solve the above technical problems, the present disclosure provides a yellowing-resistant TPU foam material and a preparation method thereof as set out in the appended set of claims. The prepared yellowing-resistant TPU foam material has excellent yellowing resistance, controllable foaming density, and uniform foam cell size.

The present disclosure adopts the following technical solutions to solve the above technical problems: A yellowing-resistant TPU foam material is provided, including a TPU prepared by subjecting an aliphatic diisocyanate, a chain extender, a polyol, an antioxidant, a UV absorber, and a UV light stabilizer to a reaction as defined in claim 1. The TPU has a softening point of 90°C to 160°C which is determined by a rheometer, preferably 95°C to 150°C, and particularly preferably 100°C to 150°C; a Shore hardness of 40 A to 98 A A which determined by the Shore A durometer, preferably 60 A to 90 A, and particularly preferably 75 A to 88 A; and a melt index of 5 to 250 g/10 min which obtained by a 5 kg load test at 210°C according to ASTM D1238.

The yellowing-resistant TPU foam material of the present disclosure has the following beneficial effects:
In a 300 h long-term accelerated test, the foam material prepared by the present disclosure undergoes no yellowing and exhibits a yellowing resistance grade of 5, indicating very excellent yellowing resistance, which is significantly better than that of the current traditional TPU foam material. The obtained foam material has a density of 0.05 g/cm³ to 0.5 g/cm³, a controllable foaming density, a uniform foam cell size, and prominent resilience and mechanical strength. Under long-term light exposure, an aliphatic TPU will not undergo automatic oxidation of a carbamate bridge structure into a quinone-imine bond or an azo compound, which can improve the yellowing resistance.

The following improvements can be further made by the present disclosure based on the above technical solution.

Further, the aliphatic diisocyanate include one from the group consisting of hexamethylene diisocyanate (HDI), isophorone diisocyanate (IPDI), xylylene diisocyanate (XDI) or hydrogenated phenylmethane diisocyanate (H₁₂MDI), cyclohexyl dimethylene diisocyanate (H₆XDI), and cyclohexyl diisocyanate, or a mixture of two or more therefrom.

The above-mentioned further solution has the following beneficial effect: The above-mentioned raw materials can make the foaming material have excellent yellowing resistance.

Further, the chain extender include one from the group consisting of 1,2-ethylene glycol, 1,3-propylene glycol, 1,4-butylene glycol, 1,6-hexylene glycol, and cyclohexanedimethanol (CHDM), or a mixture of two or more therefrom.

The above-mentioned further solution has the following beneficial effect: The use of the above-mentioned raw material as the chain extender can improve the mechanical properties of the yellowing-resistant TPU foam material.

Further, an amount of the antioxidant is 0% to 0.3% of a total amount of the TPU, and the antioxidant is a hindered phenol antioxidant or a phosphite antioxidant.

Further, an amount of the UV absorber is 0.5% to 1.5% of the total amount of the TPU, and the UV absorber is a benzotriazole UV absorber, a formamidine UV absorber, a triazine UV absorber, or a benzophenone UV absorber.

Further, an amount of the UV light stabilizer may be 0.5% to 4% of the total amount of the TPU, and the UV light stabilizer may be a hindered amine light stabilizer.

The above-mentioned further solution has the following beneficial effect: The yellowing resistance can be further improved.

Further, the polyol include one from the group consisting of a polycarbonate polyol, a polycaprolactone (PCL) polyol, and a polyether polyol with a functionality of 1.9 to 2.1, or a mixture of two or more therefrom.

The above-mentioned further solution has the following beneficial effect: The resilience of the prepared TPU foam material can be improved.

The present disclosure also provides a preparation method of a yellowing-resistant TPU foam material, including: subjecting a TPU to a physical foaming process to obtain the yellowing-resistant TPU foam material, where the TPU foam material has a density of 0.05 g/cm³ to 0.5 g/cm³ and a foam cell size of 10 µm to 200 µm.

The preparation method of a yellowing-resistant TPU foam material according to the present disclosure has the following beneficial effect: The preparation method can ensure that the TPU foam material prepared by foaming the TPU has excellent mechanical properties.

Further, the physical foaming process may preferably include: adding 100 parts by weight of the TPU, 1 to 60 parts by weight of a physical foaming agent, and 100 to 500 parts by weight of water to a pressure-resistant vessel, and stirring a resulting mixture to form a suspension; heating the suspension to 80°C to 160°C, making a pressure to reach 10 bar to 250 bar, and keeping the suspension at the temperature and the pressure for 0 min to 180 min; and discharging the suspension in the pressure-resistant vessel into an atmospheric environment to obtain the yellowing-resistant TPU foam material.

The above-mentioned further solution has the following beneficial effect: By heating the pre-mixture and controlling the pressure to realize rapid foaming, an obtained TPU foam material has excellent tensile strength and resilience.

Further, the physical foaming process may also include the following: adding 100 parts by weight of the TPU into an extruder for melting, and injecting a physical foaming agent at a tail end of the extruder; controlling a pressure at 10 bar to 250 bar, an extruder die temperature at 80°C to 180°C, and a die pressure at 10 bar to 150 bar; and extruding through a die to obtain the yellowing-resistant TPU foam material.

The above-mentioned further solution has the following beneficial effect: With the extruder, the TPU can be directly made into foam particles or foam plates, which has a wide application range.

Further, the physical foaming process may also include: adding 100 parts by weight of the TPU into a pressure-resistant vessel, and injecting 1 to 100 parts by weight of a physical foaming agent into the pressure-resistant vessel; making a pressure to reach 10 bar to 350 bar and keeping the pressure for 1 h to 48 h to make the physical foaming agent reach a dissolution equilibrium in the TPU; and heating the material with dissolution equilibrium at 100°C to 140°C for foaming to obtain the yellowing-resistant TPU foam material.

The above-mentioned further solution has the following beneficial effect: Pressurization is conducted first and then foaming is conducted, such that the foaming agent can completely enter the TPU, which leads to prominent foaming effect and resilience.

Further, the physical foaming agent may include one from the group consisting of nitrogen, carbon dioxide, air, methane, propane, butane, or pentane, or a mixture of two or more therefrom.

The above-mentioned further solution has the following beneficial effect: A prominent foaming effect can be achieved.

The present disclosure also provides use of the TPU foam material described above in the field of flexible foams, where the TPU foam material is particularly suitable for shoe materials, floor coverings, transportation parts, toys, and the like.

### DETAILED DESCRIPTION OF THE EMBODIMENTS

The principles and features of the present disclosure will be described below, and the examples given are used merely to explain the present disclosure, rather than limit the scope of the present disclosure.

A yellowing-resistant TPU foam material is provided, including a TPU prepared by subjecting an aliphatic diisocyanate, a chain extender, a polyol, an antioxidant, a UV absorber, and a UV light stabilizer to a reaction as set out in the appended set of claims.

Specifically, the TPU is prepared as follows: an aliphatic diisocyanate, a polyol with a molar mass of 500 g/mol to 10,000 g/mol, and a chain extender with a molar mass of 50 g/mol to 500 g/mol are mixed, and a resulting mixture is subjected to a reaction at 150°C to 200°C through a one-pot method or a prepolymer method in an extrusion reaction extruder to produce the TPU.

A modulation index of each component in the above reaction for preparing the TPU is 80 to 110, which is specifically a ratio of a mole number of isocyanate in the aliphatic diisocyanate to a mole number of groups in the chain extender and polyol that are reactive to isocyanate.

The TPU has a softening point of 90°C to 160°C, which is determined by the Shimadzu CFT-500 series rheometer; a Shore hardness of 40 A to 98 A, which is determined by the Shore A durometer; and a melt index of 5 to 250 g/10 min, which is obtained by a 5 kg load test at 210°C according to ASTM D1238. The foam material has a yellowing resistance grade of 4.5 to 5, which is obtained at a lamp irradiation intensity of 0.77 W/m²/nm of a 340 nm UVA lamp according to ASDM-D1148 or a 300 h irradiation test according to HG/T3689-2001A. According to ISO 105-A02: 1993, the yellowing resistance grade is assessed under the standard light source D65, where grade 5 means that a material undergoes no yellowing, grade 4.5 means that a material only undergoes slight yellowing, and grade 1 means that a material undergoes very severe yellowing.

Specifically, the aliphatic diisocyanate is HDI, IPDI, XDI or hydrogenated phenylmethane diisocyanate (H₁₂MDI), cyclohexyl dimethylene diisocyanate (H₆XDI), and cyclohexyl diisocyanate.

The chain extender is an aliphatic, aromatic, or alicyclic glycol compound with a molar mass of 50 g/mol to 500 g/mol; specifically, the chain extender is 1,2-ethylene glycol, 1,3-propylene glycol, 1,4-butylene glycol, 1,6-hexylene glycol, or CHDM with 2 to 14 C atoms, or the chain extender may be 2-hydroxyethyl ether, m-phenylene glycol bis(hydroxyethyl)ether, or 1,4-dihydroxymethylcyclohexane; and
preferably, the chain extender may be 1,4-butylene glycol.

An amount of the antioxidant is preferably 0% to 0.3% and more preferably 0% to 0.1% of a total amount of the TPU, and the antioxidant is preferably a hindered phenol antioxidant or a phosphite antioxidant, specifically Irganox1010, Irganox1076, Irganox1098, Irganox3114, Irganox126, Irgafos168, or Irgafos 618 of BASF. An amount of the UV absorber is preferably 0.5% to 1.5% and more preferably 0.8% to 1.5% of the total amount of the TPU, and the UV absorber is preferably be a benzotriazole UV absorber, a formamidine UV absorber, a triazine UV absorber, or a benzophenone UV absorber, specifically TinuvinP, Tinuvin327, Tinuvin328, Tinuvin329, Tinuvin234, Tinuvin312, TinuvinUV-1, or TinuvinUV-3 of BASF. An amount of the UV light stabilizer is preferably 0.5% to 4% and more preferably 1% to 3% of the total amount of the TPU, and the UV light stabilizer is preferably a hindered amine light stabilizer, specifically Tinuvin571, Tinuvin770, Tinuvin622, Tinuvin944, or Tinuvin144.

The polyol is one from the group consisting of a polycarbonate polyol, a polyester polyol, and a polyether polyol with a functionality of 1.9 to 2.1, or a mixture of two or more therefrom, where the polyether polyol preferably has a molar mass of 800 g/mol to 1,200 g/mol and the polyether polyol preferably has a molar mass of 500 g/mol to 2,000 g/mol.

Preferably, the polyol is a polyether polyol with a functionality of 2. Specifically, the polyether polyol more preferably is poly(ethylene glycol adipate) (PEA), poly(diethylene glycol adipate) (PDA), poly(butylene glycol adipate) (PBA), poly(propylene glycol adipate) (PPA), polypropylene glycol (PPG), or poly(tetramethylene ether)glycol (PTMEG); and even more preferably a mixture of PBA and PTMEG.

### Example 1

A preparation method of a yellowing-resistant TPU foam material included: 30 kg of HDI, 11 kg of 1,4-butylene glycol, 100 kg of a mixture of PBA and PTMEG in a mass ratio of 1:1, a hindered phenol antioxidant, a benzotriazole UV absorber, and a hindered amine light stabilizer were added into a twin-screw reaction extruder and subjected to a reaction at 150°C to 180°C to obtain a TPU, where the benzotriazole UV absorber was TinuvinP and added at a specific amount 0.5% of a total amount of the TPU; the hindered amine light stabilizer was Tinuvin571 and added at a specific amount 0.5% of the total amount of the TPU; and the TPU particles had a softening point of 90°C, a Shore hardness of 40 A, and a melt index of 250 g/10 min;
100 parts by weight of the TPU, 30 parts by weight of butane, and 300 parts by weight of water were added to a 500 L high-pressure reactor and then stirred to form a suspension; the suspension was heated to 100°C and kept at a pressure of 10 bar; and then the suspension in the high-pressure reactor was discharged into an atmospheric environment and dried to obtain yellowing-resistant TPU foam material particles, where the TPU foam material particles had a density of 0.05 g/cm³ and a foam cell size of 10 µm to 40 µm;
the TPU foam material particles obtained above were filled into a mold with a length of 300 mm, a width of 250 mm, and a thickness of 50 mm; and 2 bar water vapor was used to compress by 10% along a thickness direction of the mold for bonding and molding of the TPU foam material particles to finally obtain a molded foam product. The obtained foam product was placed at 50°C and 50% RH (humidity) for 2 h, then dried in a constant-temperature room at 80°C for 2 h, and finally placed at 25°C and 50%RH for 2 h to evaluate its performance.

### Example 2

A preparation method of a yellowing-resistant TPU foam material included: 70 kg of IPDI, 15 kg of 1,4-butylene glycol, 100 kg of PTMEG, a hindered phenol antioxidant, a benzotriazole UV absorber, and a hindered amine light stabilizer were added into a twin-screw extruder and subjected to a reaction at 150°C to 200°C to obtain a TPU, where the hindered phenol antioxidant was Irganox1010 and added at a specific amount 0.05% of a total amount of the TPU; the benzotriazole UV absorber was Tinuvin 327 and added at a specific amount 0.8% of the total amount of the TPU; the hindered amine light stabilizer was Tinuvin 770 and added at a specific amount 1% of the total amount of the TPU; and the TPU particles had a softening point of 160°C, a Shore hardness of 98 A, and a melt index of 5 g/10 min;
100 parts by weight of the TPU, 60 parts by weight of carbon dioxide, and 500 parts by weight of water were added to a 1,200 L high-pressure reactor and then stirred to form a suspension; the suspension was heated to 130°C, a pressure was controlled at 100 bar, and the suspension was kept at the temperature and the pressure for 180 min; and then the suspension in the high-pressure reactor was discharged into an atmospheric environment and dried to obtain yellowing-resistant TPU foam material particles, where the TPU foam material particles had a density of 0.5 g/cm³ and a foam cell size of 70 µm to 100 µm;
the TPU foam material particles obtained above were filled into a mold with a length of 300 mm, a width of 250 mm, and a thickness of 50 mm; and 2 bar water vapor was used to compress by 10% along a thickness direction of the mold for bonding and molding of the TPU foam material particles to finally obtain a molded foam product. The obtained foam product was placed at 50°C and 50% RH for 2 h, then dried in a constant-temperature room at 80°C for 2 h, and finally placed at 25°C and 50%RH for 2 h to evaluate its performance.

### Example 3

A preparation method of a yellowing-resistant TPU foam material included: 51 kg of hydrogenated XDI, 12 kg of 1,4-butylene glycol, 100 kg of PBA, a hindered phenol antioxidant, a benzotriazole UV absorber, and a hindered amine light stabilizer were added into a twin-screw extruder and subjected to a reaction at 150°C to 200°C to obtain a TPU, where the hindered phenol antioxidant was Irganox1076 and added at a specific amount 0.1% of a total amount of the TPU; the benzotriazole UV absorber was Tinuvin312 and added at a specific amount 1% of the total amount of the TPU; the hindered amine light stabilizer was Tinuvin622 and added at a specific amount 2% of the total amount of the TPU; and the TPU particles had a softening point of 125°C, a Shore hardness of 85 A, and a melt index of 100 g/10 min;
100 parts by weight of the TPU, 30 parts by weight of nitrogen, and 500 parts by weight of water were added to a 1,000 L high-pressure reactor and then stirred to form a suspension; the suspension was heated to 130°C, a pressure was controlled at 70 bar, and the suspension was kept at the temperature and the pressure for 70 min; and then the suspension in the high-pressure reactor was discharged into an atmospheric environment and dried to obtain yellowing-resistant TPU foam material particles, where the TPU foam material particles had a density of 0.15 g/cm³ and a foam cell size of 100 µm to 120 µm;
the TPU foam material particles obtained above were filled into a mold with a length of 300 mm, a width of 250 mm, and a thickness of 50 mm; and 2 bar water vapor was used to compress by 10% along a thickness direction of the mold for bonding and molding of the TPU foam material particles to finally obtain a molded foam product. The obtained foam product was placed at 50°C and 50% RH for 2 h, then dried in a constant-temperature room at 80°C for 2 h, and finally placed at 25°C and 50%RH for 2 h to evaluate its performance.

### Example 4

A preparation method of a yellowing-resistant TPU foam material included: 45 kg of hydrogenated diphenylmethane diisocyanate, 10 g of 1,4-butylene glycol, 100 kg of PTMEG, a hindered phenol antioxidant, a benzotriazole UV absorber, and a hindered amine light stabilizer were added into a twin-screw extruder and subjected to a reaction at 150°C to 200°C to obtain a TPU, where the hindered phenol antioxidant was Irganox1098 and added at a specific amount 0.1% of a total amount of the TPU; the benzotriazole UV absorber was TinuvinUV-1 and added at a specific amount 1.5% of the total amount of the TPU; the hindered amine light stabilizer was Tinuvin944 and added at a specific amount 3% of the total amount of the TPU; and the TPU particles had a softening point of 145°C, a Shore hardness of 80 A, and a melt index of 50 g/10 min;
100 parts by weight of the TPU were added into a two-screw extruder for melting, and a screw temperature was controlled at 100°C to 180°C; then 50 parts by weight of nitrogen were injected at a tail end of the extruder through a booster pump, an extruder die temperature was controlled at 100°C, and a die pressure was controlled at 100 bar; and the material was subjected to extrusion foaming through a die, and then cut under water to obtain yellowing-resistant TPU foam material particles, where the TPU foam material particles had a density of 0.25 g/cm³ and a foam cell size of 70 µm to 100 µm;
the TPU foam material particles obtained above were filled into a mold with a length of 300 mm, a width of 250 mm, and a thickness of 50 mm; and 2 bar water vapor was used to compress by 10% along a thickness direction of the mold for bonding and molding of the TPU foam material particles to finally obtain a molded foam product. The obtained foam product was placed at 50°C and 50% RH for 2 h, then dried in a constant-temperature room at 80°C for 2 h, and finally placed at 25°C and 50%RH for 2 h to evaluate its performance.

### Example 5

A preparation method of a yellowing-resistant TPU foam material included: 65 kg of hydrogenated diphenylmethane diisocyanate, 12 kg of 1,4-butylene glycol, 100 kg of PTMEG, a hindered phenol antioxidant, a benzotriazole UV absorber, and a hindered amine light stabilizer were added into a twin-screw extruder and subjected to a reaction at 150°C to 200°C to obtain a TPU, where the hindered phenol antioxidant was Irgafos168 and added at a specific amount 0.3% of a total amount of the TPU; the benzotriazole UV absorber was TinuvinUV-3 and added at a specific amount 1.2% of the total amount of the TPU; the hindered amine light stabilizer was Tinuvin144 and added at a specific amount 4% of the total amount of the TPU; and the TPU particles had a softening point of 110°C, a Shore hardness of 90 A, and a melt index of 20 g/10 min;
100 parts by weight of the TPU were added into a two-screw extruder for melting, and a screw temperature was controlled at 100°C to 180°C; then 30 parts by weight of carbon dioxide were injected at a tail end of the extruder through a booster pump, an extruder die temperature was controlled at 100°C, and a die pressure was controlled at 80 bar; and the material was subjected to extrusion foaming through a die, and then cut under water to obtain a yellowing-resistant TPU foam plate material with a thickness of 20 mm, where the TPU foam plate material had a density of 0.25 g/cm³ and a foam cell size of 100 µm to 120 µm;
The obtained foam plate material was placed at 50°C and 50% RH for 2 h, then dried in a constant-temperature room at 80°C for 2 h, and finally placed at 25°C and 50%RH for 2 h to evaluate its performance.

### Example 6

A preparation method of a yellowing-resistant TPU foam material included: 55 kg of IPDI, 15 kg of 1,4-butylene glycol, 100 kg of PTMEG, a hindered phenol antioxidant, a benzotriazole UV absorber, and a hindered amine light stabilizer were added into a twin-screw extruder and subjected to a reaction at 150°C to 200°C to obtain a TPU, where the hindered phenol antioxidant was Irgafos618 and added at a specific amount 0.15% of a total amount of the TPU; the benzotriazole UV absorber was Tinuvin234 and added at a specific amount 1.5% of the total amount of the TPU; the hindered amine light stabilizer was Tinuvin571 and added at a specific amount 2.5% of the total amount of the TPU; and the TPU particles had a softening point of 155°C, a Shore hardness of 88 A, and a melt index of 40 g/10 min;
100 parts by weight of the TPU were added into a 200 L pressure-resistant vessel, and 100 parts by weight of nitrogen were injected into the pressure-resistant vessel to make a pressure in the pressure-resistant vessel reach 150 bar and maintain at the value for 48 h, such that the nitrogen reached a dissolution equilibrium inside the TPU and the physical foaming agent penetrated into the TPU; and then the material with dissolution equilibrium was heated in 140°C water vapor for foaming to obtain yellowing-resistant TPU foam material particles, where the dissolution equilibrium indicated that the physical foaming agent was uniformly dispersed after entering the TPU, and the TPU foam material particles had a density of 0.22 g/cm³ and a foam cell size of 30 µm to 60 µm;
the TPU foam material particles obtained above were filled into a mold with a length of 300 mm, a width of 250 mm, and a thickness of 50 mm; and 2 bar water vapor was used to compress by 10% along a thickness direction of the mold for bonding and molding of the TPU foam material particles to finally obtain a molded foam product. The obtained foam product was placed at 50°C and 50% RH for 2 h, then dried in a constant-temperature room at 80°C for 2 h, and finally placed at 25°C and 50%RH for 2 h to evaluate its performance.

The molded foam products prepared in Examples 1 to 6 were tested. A tensile strength, an elongation at break, a tearing strength, and a resilience were tested by a tensile machine. According to ASDM-D1148, a 340 nm UVA lamp was used to test at a lamp irradiation intensity of 0.77 W/m²/nm to obtain a yellowing resistance grade I; and according to HG/T3689-2001A, a 300 h irradiation test was conducted to obtain a yellowing resistance grade II. Specific test data were shown in the table below:

**Table 1**

| Item | Yellowing resistance grade I | Yellowing resistance grade II | Tensile strength (kPa) | Elongation at break | Tearing strength (kN/m) | Resilience |
|---|---|---|---|---|---|---|
| Example 1 | 4.5 | 5 | 1200 | 180% | 15 | 58% |
| Example 2 | 5 | 4.5 | 1100 | 170% | 17 | 56% |
| Example 3 | 4.5 | 5 | 1300 | 165% | 12 | 60% |
| Example 4 | 5 | 5 | 1050 | 175% | 15 | 58% |
| Example 5 | 4.5 | 4.5 | 1250 | 180% | 10 | 57% |
| Example 6 | 5 | 5 | 1300 | 180% | 16 | 60% |
| Infinergy 32-100U10 product | 3-3.5 | 3-3.5 | 1200 | 170% | 13 | 58% |

It can be seen from the data in the table that the TPU foam products prepared according to Examples 1 to 6 exhibit a yellowing resistance grade of 4.5 to 5 in a 300 h accelerated test, indicating a very prominent yellowing resistance, which is significantly better than that of the existing TPU foam products on the market; and the TPU foam products of the present disclosure also have excellent resilience and mechanical strength.

## Claims

1. A yellowing-resistant thermoplastic polyurethane (TPU) foam material comprising a TPU prepared by subjecting an aliphatic diisocyanate, a chain extender, a polyol, an antioxidant, an ultraviolet (UV) absorber, and a UV light stabilizer to a reaction,
wherein:
the aliphatic diisocyanate comprises one or more from the group consisting of hexamethylene diisocyanate (HDI), isophorone diisocyanate (IPDI), xylylene diisocyanate (XDI) or hydrogenated diphenylmethane diisocyanate (H₁₂MDI), cyclohexyl dimethylene diisocyanate (H₆XDI), and cyclohexyl diisocyanate,
the chain extender comprises one or more from the group consisting of 1,2-ethylene glycol, 1,3-propylene glycol, 1,4-butylene glycol, 1,6-hexylene glycol, and cyclohexanedimethanol (CHDM),
the polyol comprises one or more from the group consisting of a polycarbonate polyol, a polyester polyol, and a polyether polyol with a functionality of 1.9 to 2.1, and
wherein the TPU has
a yellowing resistance grade of 4.5 to 5, which is obtained at a lamp irradiation intensity of 0.77 W/m²/nm of a 340 nm UVA lamp according to ASDM-D1148, or a 300 h irradiation test according to HG/T3689-2001A, or according to ISO 105-A02: 1993 using the standard light source D65, and
a softening point of 90°C to 160°C which is determined by a rheometer, a Shore hardness of 40 A to 98 A which determined by the Shore A durometer, and a melt index of 5 to 250 g/10 min which obtained by a 5 kg load test at 210°C according to ASTM D1238.

2. The yellowing-resistant TPU foam material according to claim 1, wherein an amount of the antioxidant is 0.1 wt.% to 0.3 wt.% of a total amount of the TPU, and the antioxidant is a hindered phenol antioxidant or a phosphite antioxidant; an amount of the UV absorber is 0.5 wt.% to 1.5 wt.% of the total amount of the TPU, and the UV absorber is a benzotriazole UV absorber, a formamidine UV absorber, a triazine UV absorber, or a benzophenone UV absorber; and an amount of the UV light stabilizer is 0.5 wt.% to 4 wt.% of the total amount of the TPU, and the UV light stabilizer is a hindered amine light stabilizer.

3. A preparation method of a yellowing-resistant TPU foam material comprising: subjecting a TPU according to claim 1 or 2 to a physical foaming process to obtain the yellowing-resistant TPU foam material.

4. The preparation method of the yellowing-resistant TPU foam material according to claim 3, wherein the physical foaming process comprises: adding the TPU, a physical foaming agent, and water to a pressure-resistant vessel, and stirring a resulting mixture to form a suspension; heating the suspension, and maintaining a pressure to be 10 bar to 250 bar; and discharging the suspension in the pressure-resistant vessel into an atmospheric environment to obtain the yellowing-resistant TPU foam material.

5. The preparation method of the yellowing-resistant TPU foam material according to claim 3. wherein the physical foaming process comprises: adding the TPU into an extruder for melting, injecting a physical foaming agent into the extruder, and keeping a resulting mixture under a pressure of 20 bar to 300 bar; and extruding through a die to obtain the yellowing-resistant TPU foam material.

6. The preparation method of the yellowing-resistant TPU foam material according to claim 3, wherein the physical foaming process comprises: adding the TPU into a pressure-resistant vessel, and injecting a physical foaming agent into the pressure-resistant vessel; allowing pressure to reach 10 bar to 350 bar and keeping under the pressure for 1 h to 48 h; and heating the material to obtain the yellowing-resistant TPU foam material.

7. The preparation method of the yellowing-resistant TPU foam material according to any one of claims 4 to 6, wherein the physical foaming agent comprises one or more from the group consisting of nitrogen, carbon dioxide, air, methane, propane, butane, and pentane.

8. Use of the TPU foam material according to claim 1 or 2 in the field of flexible foams, wherein the TPU foam material is particularly suitable for shoe materials, floor coverings, transportation parts, and toys.

## Patentansprüche

1. Ein vergilbungsbeständiges thermoplastisches Polyurethan (TPU)-Schaumstoffmaterial, das ein TPU umfasst, welches hergestellt wird, indem ein aliphatisches Diisocyanat, ein Kettenverlängerer, ein Polyol, ein Antioxidationsmittel, ein Ultraviolett (UV)-Absorptionsmittel und ein UV-Licht-Stabilisator einer Reaktion unterzogen werden,
wobei:
das aliphatische Diisocyanat eines oder mehrere aus der Gruppe bestehend aus Hexamethylendiisocyanat (HDI), Isophorondiisocyanat (IPDI), Xylylendiisocyanat (XDI) oder hydriertes Diphenylmethandiisocyanat (H₁₂MDI), Cyclohexyldimethylendiisocyanat (H₆XDI) und Cyclohexyldiisocyanat umfasst,
der Kettenverlängerer eines oder mehrere aus der Gruppe bestehend aus 1,2-Ethylenglykol, 1,3-Propylenglykol, 1,4-Butylenglykol, 1,6-Hexylenglykol und Cyclohexandimethanol (CHDM) umfasst,
das Polyol eines oder mehrere aus der Gruppe bestehend aus einem Polycarbonatpolyol, einem Polyesterpolyol und einem Polyetherpolyol mit einer Funktionalität von 1,9 bis 2,1 umfasst, und
wobei das TPU Folgendes aufweist:
einen Vergilbungsbeständigkeitsgrad von 4,5 bis 5, der bei einer Lampenbestrahlungsstärke von 0,77 W/m²/nm einer 340nm UVA-Lampe gemäß ASDM-D1148 oder einem 300 Stunden Bestrahlungstest gemäß HG/T3689-2001A oder gemäß ISO 105-A02: 1993 unter Verwendung der Standardlichtquelle D65 erzielt wird, und
einen Erweichungspunkt von 90°C bis 160°C, der mit einem Rheometer bestimmt wird, eine Shore-Härte von 40 A bis 98 A, die mit dem Shore-A-Durometer bestimmt wird, und einen Schmelzindex von 5 bis 250 g/10 min, der durch einen 5 kg Belastungstest bei 210°C gemäß ASTM D1238 erhalten wird.

2. Vergilbungsbeständiges TPU-Schaumstoffmaterial nach Anspruch 1, wobei die Menge des Antioxidationsmittels 0,1 bis 0,3 Gew.-% der Gesamtmenge des TPUs beträgt und das Antioxidationsmittel ein gehindertes Phenol-Antioxidationsmittel oder ein Phosphit-Antioxidationsmittel ist; die Menge des UV- Absorptionsmittels 0,5 bis 1,5 Gew.-% der Gesamtmenge des TPUs beträgt und das UV-Absorptionsmittel ein Benzotriazol-UV-Absorptionsmittel, ein Formamidin-UV-Absorptionsmittel, ein Triazin-UV-Absorptionsmittel oder ein Benzophenon-UV-Absorptionsmittel ist; und die Menge des UV-Licht-Stabilisators 0,5 Gew.-% bis 4 Gew.-% der Gesamtmenge des TPUs beträgt und der UV-Licht-Stabilisator ein gehinderter Amin-Lichtstabilisator ist.

3. Ein Verfahren zur Herstellung eines vergilbungsbeständigen TPU-Schaumstoffmaterials, das umfasst: Ein TPU nach Anspruch 1 oder 2 einem physikalischen Schäumungsprozess zu unterziehen, um das vergilbungsbeständige TPU-Schaumstoffmaterial zu erhalten.

4. Verfahren zur Herstellung des vergilbungsbeständigen TPU-Schaumstoffmaterials nach Anspruch 3, wobei das physikalische Schäumungsverfahren umfasst: Zugabe des TPU, eines physikalischen Schäumungsmittels und von Wasser in ein druckfestes Gefäß und Rühren des resultierenden Gemisches zur Bildung einer Suspension; Erhitzen der Suspension und Aufrechterhalten eines Drucks von 10 bar bis 250 bar; und Ablassen der Suspension aus dem druckfesten Gefäß in eine atmosphärische Umgebung, um das vergilbungsbeständige TPU-Schaumstoffmaterial zu erhalten.

5. Verfahren zur Herstellung des vergilbungsbeständigen TPU-Schaumstoffmaterials nach Anspruch 3, wobei das physikalische Schäumungsverfahren umfasst: Zugabe des TPU in einen Extruder zum Schmelzen, Einspritzen eines physikalischen Schäumungsmittels in den Extruder und Halten des resultierenden Gemischs unter einem Druck von 20 bar bis 300 bar; und Extrudieren durch eine Düse, um das vergilbungsbeständige TPU-Schaumstoffmaterial zu erhalten.

6. Verfahren zur Herstellung des vergilbungsbeständigen TPU-Schaumstoffmaterials nach Anspruch 3, wobei der physikalische Schäumungsprozess umfasst: Zugabe des TPU in ein druckbeständiges Gefäß und Einspritzen eines physikalischen Schäumungsmittels in das druckbeständige Gefäß; Ermöglichen, dass der Druck 10 bar bis 350 bar erreicht, und Halten unter dem Druck für 1 h bis 48 h; und Erhitzen des Materials, um das vergilbungsbeständige TPU-Schaumstoffmaterial zu erhalten.

7. Verfahren zur Herstellung des vergilbungsbeständigen TPU-Schaumstoffmaterials nach einem der Ansprüche 4 bis 6, wobei das physikalische Schäumungsmittel eines oder mehrere aus der Gruppe bestehend aus Stickstoff, Kohlendioxid, Luft, Methan, Propan, Butan und Pentan umfasst.

8. Verwendung des TPU-Schaumstoffmaterials nach Anspruch 1 oder 2 im Bereich der Weichschäume, wobei das TPU-Schaumstoffmaterial besonders für Schuhmaterialien, Bodenbeläge, Teile für den Transport und Spielzeug geeignet ist.

## Revendications

1. Matériau de mousse de polyuréthane thermoplastique (TPU) résistant au jaunissement comprenant un TPU préparé en soumettant un diisocyanate aliphatique, un agent d'extension de chaîne, un polyol, un antioxydant, un absorbeur d'ultraviolet (UV) et un photostabilisant d'UV à une réaction,
le diisocyanate aliphatique comprenant l'un ou plusieurs du groupe constitué par le diisocyanate d'hexaméthylène (HDI), le diisocyanate d'isophorone (IPDI), le diisocyanate de xylylène (XDI) ou le diisocyanate de diphénylméthane hydrogéné (H₁₂MDI), le diisocyanate de cyclohexyldiméthylène (H₆XDI) et le diisocyanate de cyclohexyle,
l'agent d'extension de chaîne comprenant l'un ou plusieurs du groupe constitué par le 1,2-éthylène glycol, le 1,3-propylène glycol, le 1,4-butylène glycol, le 1,6-hexylène glycol et le cyclohexanediméthanol (CHDM),
le polyol comprenant l'un ou plusieurs du groupe constitué par un polycarbonate polyol, un polyester polyol et un polyéther polyol doté d'une fonctionnalité de 1,9 à 2,1, et
le TPU ayant
un degré de résistance au jaunissement de 4,5 à 5, qui est obtenu à une intensité d'irradiation par une lampe de 0,77 W/m²/nm d'une lampe d'UVA de 340 nm conformément à la norme ASDM-D1148, ou un test d'irradiation de 300 h conformément à la norme HG/T3689-2001A, ou conformément à la norme ISO 105-A02:1993 en utilisant la source de lumière standard D65, et
un point de ramollissement de 90 °C à 160 °C qui est déterminé par un rhéomètre, une dureté Shore de 40 A à 98 A qui est déterminée par le duromètre Shore A, et un indice de fusion de 5 à 250 g/10 min qui est obtenu par une charge de test de 5 kg à 210 °C conformément à la norme ASTM D1238.

2. Matériau de mousse de polyuréthane thermoplastique (TPU) résistant au jaunissement selon la revendication 1, une quantité de l'antioxydant étant de 0,1 % en poids à 0,3 % en poids d'une quantité totale du TPU, et l'antioxydant étant un antioxydant de type phénol encombré ou un antioxydant de type phosphite ; une quantité de l'absorbeur d'UV étant de 0,5 % en poids à 1,5 % en poids de la quantité totale du TPU, et l'absorbeur d'UV étant un absorbeur d'UV de type benzotriazole, un absorbeur d'UV de type formamidine, un absorbeur d'UV de type triazine, ou un absorbeur d'UV de type benzophénone ; et une quantité du photostabilisant d'UV étant de 0,5 % en poids à 4 % en poids de la quantité totale du TPU et le photostabilisant d'UV étant un photostabilisant de type amine encombrée.

3. Procédé de préparation d'un matériau de mousse de TPU résistant au jaunissement comprenant : la soumission d'un TPU selon la revendication 1 ou 2 à un processus de moussage physique pour obtenir le matériau de mousse de TPU résistant au jaunissement.

4. Procédé de préparation du matériau de mousse de TPU résistant au jaunissement selon la revendication 3, le processus de moussage physique comprenant : l'ajout du TPU, d'un agent de moussage physique, et d'eau à une cuve résistant à la pression, et l'agitation d'un mélange résultant pour former une suspension ; le chauffage de la suspension, et le maintien d'une pression pour être de 10 bars à 250 bars ; et la décharge de la suspension dans la cuve résistant à la pression dans un environnement atmosphérique pour obtenir le matériau de mousse de TPU résistant au jaunissement.

5. Procédé de préparation du matériau de mousse de TPU résistant au jaunissement selon la revendication 3, le processus de moussage physique comprenant : l'ajout du TPU dans une extrudeuse pour une fusion, l'injection d'un agent de moussage physique dans l'extrudeuse, et le maintien d'un mélange résultant sous une pression de 20 bars à 300 bars ; et l'extrusion à travers une matrice pour obtenir le matériau de mousse de TPU résistant au jaunissement.

6. Procédé de préparation du matériau de mousse de TPU résistant au jaunissement selon la revendication 3, le processus de moussage physique comprenant : l'ajout du TPU dans une cuve résistant à la pression, et l'injection d'un agent de moussage physique dans la cuve résistant à la pression ; le fait de laisser la pression atteindre 10 bars à 350 bars et le maintien sous la pression pendant 1 h à 48 h ; et le chauffage du matériau pour obtenir le matériau de mousse de TPU résistant au jaunissement.

7. Procédé de préparation du matériau de mousse de TPU résistant au jaunissement selon l'une quelconque des revendications 4 à 6, l'agent de moussage physique comprenant l'un ou plusieurs du groupe constitué par l'azote, le dioxyde de carbone, l'air, le méthane, le propane, le butane et le pentane.

8. Utilisation du matériau de mousse de TPU selon la revendication 1 ou 2 dans le domaine des mousses flexibles, le matériau de mousse de TPU étant particulièrement approprié pour des matériaux de chaussure, des couvertures de sol, des pièces de transport et des jouets.
